# EUROPÄISCHE PATENTANMELDUNG

(11) **EP 4 759 703 A1**
(43) Veröffentlichungstag der Anmeldung: **17.06.2026**
(21) Anmeldenummer: 25222830.9
(22) Anmeldetag: 12.12.2025
(51) Int. Cl.: B64C 3/48, B64C 9/02, B64C 9/18, B64C 3/50

(54) **AERODYNAMISCHER PROFILKÖRPER FÜR EIN FLUGZEUG UND FLUGZEUG HIERZU**

(30) Priorität: 13.12.2024 DE 102024137603
(71) Anmelder: Deutsches Zentrum für Luft- und Raumfahrt e.V., 53227 Bonn-Oberkassel (DE)
(72) Erfinder: Sahyoun, Dominic, 38100 Braunschweig (DE)
(74) Vertreter: Gramm, Lins & Partner Patent- und Rechtsanwälte PartGmbB

(57) **Zusammenfassung**

Die Erfindung betrifft einen aerodynamischen Profilkörper für ein Flugzeug, der eine erste äußere Strömungsoberfläche und eine gegenüberliegende zweite äußere Strömungsoberfläche hat, die an einer Tragstruktur des Profilkörpers angeordnet sind und sich von einer Vorderkante des Profilkörpers hin zu einer Hinterkante des Profilkörpers erstrecken, sodass im Querschnitt dem Profilkörper eine aerodynamische Profilform verliehen wird, wobei der Profilkörper einen Hauptabschnitt hat, an dem sich ein Klappenabschnitt anschließt, wobei der Klappenabschnitt mittels einer Schwenkvorrichtung schwenkbar an dem Hauptabschnitt angeordnet ist und sowohl der Hauptquerschnitt des Hauptabschnittes und als auch der Klappenquerschnitt des Klappenabschnittes eine unveränderliche Form aufweisen, wobei in einem Übergangsabschnitt zwischen dem Hauptabschnitt und dem Klappenabschnitt die erste äußere Strömungsoberfläche biegeflexibel ist, **dadurch gekennzeichnet, dass** die Schwenkvorrichtung mindestens einen Linearaktuator hat, der mit einem ersten Befestigungspunkt an der hauptabschnittsseitigen Tragstruktur des Hauptabschnittes und mit einem gegenüberliegenden zweiten Befestigungspunkt an der klappenabschnittsseitigen Tragstruktur des Klappenabschnittes jeweils drehbeweglich angeordnet ist, sodass bei Aktuierung des Linearaktuators eine Längenänderung zwischen dem ersten und dem zweiten Befestigungspunkt bewirkt wird, wobei der Linearaktuator mit einem Kurvengetriebe derart in Wirkverbindung steht, dass der zweite Befestigungspunkt an der klappenabschnittsseitigen Tragstruktur bei Aktuierung einer durch das Kurvengetriebe vorgegebenen Trajektorie folgt.

## Beschreibung

Die Erfindung betrifft einen aerodynamischen Profilkörper für ein Flugzeug, der eine erste äußere Strömungsoberfläche und eine gegenüberliegende zweite äußere Strömungsoberfläche hat, die an einer Tragstruktur des Profilkörpers angeordnet sind und sich von einer Vorderkante des Profilkörpers hin zu einer Hinterkante des Profilkörpers erstrecken, sodass im Querschnitt dem Profilkörper eine aerodynamische Profilform verliehen wird.

Die Erfindung betrifft ebenso ein Flugzeug hierzu.

Ein solcher aerodynamischer Profilkörper hat einen Hauptabschnitt mit einer Vorderkante bzw. einem Vorderkantenabschnitt und einen sich an den Hauptabschnitt anschließenden Klappenabschnitt mit einer Hinterkante bzw. einem Hinterkantenabschnitt. Die äußere Strömungsoberfläche wird dabei durch eine obere Decklage bzw. erste äußere Strömungsoberfläche und eine untere Decklage bzw. zweite äußere Strömungsoberfläche gebildet, die sich von dem Vorderkantenabschnitt über den Hauptabschnitt und Klappenabschnitt bis zum Hinterkantenabschnitt erstrecken. In Bereichen, wo der Profilkörper keinen Klappen Abschnitt hat, erstreckt sich die äußere Strömungsoberfläche von dem Vorderkantenabschnitt über den Hauptabschnitt bis zum Hinterkantenabschnitt, vorzugsweise einstückig.

Die Decklagen bzw. Strömungsoberflächen sind dabei an einer Tragstruktur des Profilkörpers angeordnet, der in der Regel aus sich spannweitig erstreckenden Holmen und in Strömungsrichtung verlaufenden und quer zu den Holmen liegenden Spanten besteht. An diesen werden die Decklagen bzw. Strömungsoberfläche befestigt, sodass sich im Querschnitt eine aerodynamische Profilform ergibt, die bei Ausbildung des Profilkörpers als Tragflügel bei Anströmung eine Auftriebshilfe erzeugt.

Die Form eines Gegenstandes spielt nicht nur vor dem Hintergrund des Designs eine große Rolle, sondern ist in vielen Fällen auch aus technischer Hinsicht entscheidend. So ist es beispielsweise für Tragflächen von Flugzeugen entscheidend, dass die Form der Tragflächen die notwendigen aerodynamischen Eigenschaften aufweist, damit der zum Fliegen benötigte Auftrieb erzeugt werden kann. Eine stabile Form ist hier wesentlich, nicht nur aus sicherheitstechnischen Aspekten.

Gerade im Bereich der Tragflächen von Flugzeugen offenbaren jedoch starre Formen ihren größten Nachteil, nämlich dass sie unveränderbar sind. Denn je nach Flugphase ist es wünschenswert, dass die Tragflächen unterschiedliche aerodynamische Eigenschaften und Profilformen besitzen, um sich an die jeweilige Flugphase bestmöglich anzupassen und das Flugzeug darüber hinaus durch Änderung der Profilform zu steuern. So weisen bspw. Tragflächen großer Verkehrsflugzeuge in der Regel Hochauftriebshilfen (auch Landeklappen genannt) auf, die während der Start- und Landephase ausgefahren werden und so die Auftriebsfläche der Tragflächen vergrößern. Dabei entsteht eine Querschnittsveränderung der Profile der Tragflächen insgesamt, die es den Verkehrsflugzeugen ermöglicht, den notwendigen Auftrieb mit Hilfe der Tragflächen auch bei niedrigen Geschwindigkeiten zu erzeugen, ohne einen Strömungsabriss befürchten zu müssen.

Des Weiteren weisen Flugzeuge entsprechende Steuerorgane auf, mit denen sich die Lage des Flugzeuges im Flug verändern lässt. Mithilfe der Querruder, die an den Tragflächen des Flugzeuges angeordnet sind, kann das Flugzeug um die Längsachse und gegebenenfalls auch um die Querachse gedreht werden. Mithilfe der Höhenruder, die an den Leitwerken am hinteren Teil des Flugzeuges vorgesehen sind, kann das Flugzeug ebenfalls in die Querachse gedreht werden und so durch Änderung des Anstellwinkels seine Flughöhe variieren. Solche Klappen oder Ruder sind in der Regel bewegliche Klappen an den Tragflächen-Hinterkanten, die bei Aktuierung durch die umgebende Luftströmung angeströmt werden, sodass eine Kraft auf die jeweilige Tragfläche in die gewünschte Richtung bewirkt wird.

Solche Klappen bzw. Ruder an Flugzeugen werden aktuell als getrenntes Bauteil an den Flügeln oder Leitwerken angebracht. Durch einen Ausschlag des Ruders kann ein Flugzeug seine Lage im Raum ändern, wobei beim Ausschlag des Ruders dieses um einen festen Punkt im Raum gedreht wird, die sogenannte Scharnierlinie. Der Querschnitt des Flügels sowie der Klappe ändern sich dabei nicht und die Form des Flügels bleibt weitestgehend erhalten. Nur die Ausrichtung der Klappe gegenüber dem Flügel wird beim Ausschlag des Ruders verändert.

Konstruktionsbedingt ergibt sich aufgrund der festen Drehachse ein Knick zwischen dem Flügel und der Klappe auf der Profileoberfläche. Diesem Knick begegnet die Strömung durch einen lokalen steilen Anstieg des Unterdrucks auf der Profileoberseite, welche bei größeren Ausschlägen bis hin zu einer lokalen Ablösung der Strömung von der Oberfläche führen kann. Dies resultiert in einem erhöhten Widerstand und in einer verminderten Effektivität des Ruders.

Daher ist es wünschenswert, Konzepte zu entwickeln, bei denen ein solcher Knick weitestgehend vermieden werden kann. Dabei wird eine flexible Außenhaut verwendet, welche durchgängig zwischen Flügel und Ruder ist und mit einer komplexen Kinematik gekoppelt, mit der die Form und somit auch der Querschnitt des Flügels und/oder des Ruders verändert wird.

Eine solche flexible Hinterkante ist bspw. aus der nachveröffentlichten DE 10 2024 103 686.9 bekannt, bei der mithilfe eines innenliegenden Aktuators der Querschnitt des aerodynamischen Profilkörpers bei Aktuierung verändert wird. Allerdings führt dies nur zu einer vergleichsweise geringen Auslenkung und ist für die Anwendung als Ruder weitestgehend ungeeignet.

Aus der europäischen Patentanmeldung Nr. 2 006 936 ist eine formveränderbare Struktur einer Tragfläche bekannt, bei der ohne zusätzliche mechanische Hilfsmittel die tatsächliche Form bzw. das Profil der Tragfläche in einem begrenzten Umfang geändert werden kann. Hierzu werden zwei oder mehr Reihen von miteinander verbundenen Zellen vorgeschlagen, wobei die Zellen einer Reihe mit einem Druck 35 beaufschlagt werden. Werden nun die Zellen der ersten Reihe mit einem hohen Druck und die Zellen der zweiten Reihe mit einem niedrigen Druck beaufschlagt, so verändert sich das Profil der Tragfläche in eine gewünschte erste Form. Wird das Druckverhältnis der Zellreihen jedoch umgekehrt, so kann die Form wieder zurück in die Ausgangsform überführt werden.

Aus der US 2005/0029406 A1 ist ein Aktuator bekannt, der mit Hilfe von druckdichten Zellen seine Länge verändern kann. Durch Aufbringen eines Druckes in bestimmten Zellen wird deren Form so verändert, dass es insgesamt zu einer Längenveränderung des Aktuators kommt. Hierdurch lassen sich hydraulische Elemente einer mechanischen Anlage, beispielsweise eines Querruders eines Flugzeuges, ersetzen.

Nachteil dieser formverändernden Hinterkanten liegt darin, dass das verwendete Material zum einen flexibel sein muss über den gesamten Bereich und zum anderen eine notwendige Steifigkeit aufweisen muss, um den aerodynamischen Kräften standhalten zu können. Hierfür sind nicht selten komplexe Konstruktionen im Inneren des Flügels notwendig, was dem Gedanken des Leichtbaus entgegensteht.

Aus der CH 634 787 A5 ist ein Tragflügel mit einer Klappe bekannt, wobei auf der Oberseite des Flügels die Klappe mit einer dünnen, belegbaren und durchgehenden Membran verbunden ist. Im Inneren existiert ein Drehmechanismus, der über einen Seilzug bedienbar ist und zu einer Auslenkung der Klappe entlang des Drehmechanismus führt. Nachteilig hierbei ist, dass auf den Seilzug sehr hohe Kräfte ausgeübt werden müssen, um die aerodynamischen Kräfte zu überwinden oder ihnen entgegenzutreten.

Aus der US 5,839,698 B1 ist eine Hinterkante bekannt, die ebenfalls zwischen Flügel und Hinterkante eine flexible Membran aufweist und durch einen Mechanismus verschränkt werden kann. Hierbei verändert sich allerdings die Form der Hinterkante, indem ein oberer Teil der Hinterkante gegenüber einem unteren Teil der Hinterkante gegeneinander abgleiten. Das Resultat ist eine komplexe Mechanik, welche dem Gedanken des Leichtbaus fundamental gegenübersteht.

Aus der US 3,698,668 B1 ist schließlich ebenfalls eine formveränderliche Hinterkante bekannt, bei der die Außenhaut ebenfalls eine flexible Membran darstellt und durch einen komplexen, innenliegenden Mechanismus die Form bzw. der Querschnitt der Hinterkante veränderbar ist.

Es Aufgabe der vorliegenden Erfindung einen verbesserten aerodynamischen Profilkörper mit einer Klappe bzw. einem Ruder anzugeben, der eine durchgehende Profiloberfläche erlaubt und dem Gedanken des Leichtbaus entspricht.

Die Aufgabe wird mit dem aerodynamischen Profilkörper gemäß Anspruch 1 erfindungsgemäß gelöst. Vorteilhafte Ausgestaltungen der Erfindung finden sich dann in den entsprechenden Unteransprüchen.

Gemäß Anspruch 1 wird ein aerodynamischer Profilkörper für ein Flugzeug vorgeschlagen, der gattungsgemäß eine erste äußere Strömungsoberfläche und eine gegenüberliegende zweite äußere Strömungsoberfläche hat, die an einer Tragstruktur des Profilkörpers angeordnet sind und sich von einer Vorderkante des Profilkörpers hin zu einer Hinterkante des Profilkörpers erstrecken, sodass im Querschnitt dem Profilkörper eine aerodynamische Profilform verliehen wird.

Der Profilkörper hat einen Hauptabschnitt, an dem sich in spannweitigen Abschnitten ein Klappenabschnitt anschließt, wobei der Klappenabschnitt mittels einer Schwenkvorrichtung schwenkbar an dem Hauptabschnitt angeordnet ist und sowohl der Hauptquerschnitt des Hauptabschnittes und als auch der Klappenquerschnitt des Klappenabschnittes eine unveränderliche Form aufweisen.

Der Profilkörper weist des Weiteren einen Übergangsabschnitt zwischen dem Hauptabschnitt und dem Klappenabschnitt auf, zumindest innerhalb dessen die erste äußere Strömungsoberfläche biegeflexibel ist.

Die äußeren Strömungsoberfläche werden dabei aus Decklagen gebildet, die beispielsweise aus einem Aluminiumwerkstoff oder einem Faserverbundwerkstoff aufweisend ein Fasermaterial und ein das Fasermaterial einbettendes Matrixmaterial gebildet sind. Insbesondere der Faserverbundwerkstoff kann dabei auch noch andere artfremde Werkstoffe beinhalten, wie beispielsweise Metalle (bspw. Aluminium oder Kupfer).

Im Bereich des Übergangsabschnittes wird die erste äußere Strömungsoberfläche bzw. die erste Decklage, welche die äußere Strömungsoberfläche bildet, aus einem biegeflexiblen Material gebildet, welches beispielsweise durch eine Reduzierung der Wandstärke des übrigen Werkstoffes gebildet sein kann. Wird nun der Klappenabschnitt mithilfe der Schwenkvorrichtung gegenüber dem Hauptabschnitt verschränkt, so verbleibt im Übergangsabschnitt weitestgehend eine zwar gekrümmte, aber durchgehende Strömungsoberfläche erhalten, ohne dass es zu einer Knickbildung kommt.

Erfindungsgemäß ist nun vorgesehen, dass die Schwenkvorrichtung mindestens einen Linearaktuator hat, der mit einem ersten Befestigungspunkt an der hauptabschnittsseitigen Tragstruktur des Hauptabschnittes und mit einem gegenüberliegenden zweiten Befestigungspunkt an der klappenabschnittsseitigen Tragstruktur des Klappenabschnittes jeweils drehbeweglich angeordnet ist, sodass bei Aktuierung des Linearaktuators eine Längenänderung zwischen dem ersten und dem zweiten Befestigungspunkt bewirkt wird, wobei der Linearaktuator mit einem Kurvengetriebe derart in Wirkverbindung steht, dass der zweite Befestigungspunkt an der klappenabschnittsseitigen Tragstruktur bei Aktuierung einer durch das Kurvengetriebe vorgegebenen Trajektorie folgt.

Die Erfindung löst somit die Bedingung einer fixierten Scharnierlinie auf und setzt stattdessen ein Kurvengetriebe ein, welches zusammen mit dem antreibenden Linearaktuator die Klappe im Klappenabschnitt entlang einer vorgegebenen Trajektorie bewegt. Hierdurch wird die Außenhaut im Bereich des Übergangsabschnittes zwischen Hauptabschnitt und Klappenabschnitt nur durch eine Biegung belastet, während die aerodynamischen Kräfte über das Kurvengetriebe und den Aktuator in die Tragstruktur des Profilkörpers eingeleitet werden.

Das Kurvengetriebe ist dabei insbesondere so ausgebildet, dass bei einer Aktuierung des Linearaktuator und einer damit zusammenhängenden Verschwenkung des Klappenabschnittes der Übergangsabschnitt nur auf Biegung, nicht jedoch auf Zug und Druck belastet wird.

Das Kurvengetriebe kann dabei eine gekrümmte Führung sein, in der ein Führungspunkt des Linearaktuators, der an dem ersten Befestigungspunkt an der hauptabschnittseitigen Tragstruktur drehbar befestigt ist, eingreift, sodass bei einer Aktuierung des Linearaktuator und einer Veränderung der Länge zwischen dem ersten Befestigungspunkt und dem zweiten Befestigungspunkt dieser Führung innerhalb der Führung des Kurvengetriebes bewegt wird und somit der Führung des groben Getriebes folgt, sodass der Klappenabschnitt die gewünschte Schwenkbewegung ausführt und der zweite Befestigungspunkt dabei der entsprechenden Trajektorie folgt.

Dieser Führungspunkt kann beispielsweise an dem beweglichen Teil des Linearaktuators angeordnet sein. Dieser bewegliche Teil des Linearaktuators ist dabei mit seinem Ende an dem zweiten Befestigungspunkt mit der klappenabschnittseitigen Tragstruktur drehbar befestigt.

Gemäß einer Ausführungsform ist vorgesehen, dass sich die erste äußere Strömungsoberfläche durchgehend von der Vorderkante bis zu der Hinterkante erstreckt.

Die erste Decklage, welche die erste äußere Strömungsoberfläche bildet, wird demnach durchgehend von der Vorderkante bis zur Hinterkante ausgeführt, d. h. ohne Unterbrechungen in der Strömungsoberfläche. Vorzugsweise wird auch auf entsprechende Stufen und Kanten sowie Befestigungsmittel verzichtet, sodass eine laminare umströmbare Strömungsoberfläche entstehen kann. Im Bereich des Übergangsabschnittes kann das Material der Decklage bzw. der Strömungsoberfläche variieren, um die biegeflexible Eigenschaft zu erreichen. Dabei kann, zweite vorgesehen sein, dass das Material in dem Übergangsabschnitt dünner ausgeführt wird, um die biegeflexible Eigenschaft zu erreichen. Denn das aber auch, dass ein von dem Rest der Decklage verschiedenes Material verwendet wird.

Im Klappenabschnitt befindet sich somit eine Klappe bzw. ein Ruder, welches durch Auslenkung gegenüber dem Hauptabschnitt des Profilkörpers aerodynamische Kräfte erzeugt.

Gemäß einer Ausführungsform ist vorgesehen, dass die zweite äußere Strömungsoberfläche im Übergangsabschnitt unterbrochen ist und sich die klappenabschnittsseitige Strömungsoberfläche des Klappenabschnittes unter die hauptabschnittsseitige Strömungsoberfläche des Hauptabschnittes in einen Innenraum des Profilkörpers erstreckt.

Jedes kann erreicht werden, dass die klappenabschnittseitige Decklage bzw. Strömungsoberfläche, die der durchgehend verlaufenden Strömungsoberfläche gegenüberliegt, bei Aktuierung des Aktuators teilweise in den Innenraum hineinbewegt wird oder aus diesem heraus bewegt wird, wobei sichergestellt wird, dass die klappenabschnittseitige Strömungsoberfläche im Querschnitt immer hinter der hauptabschnittseitigen Strömungsoberfläche zurück steht, sodass sich die Luftströmung nicht in den Innenraum der Klappe verfängt.

Hierfür kann es vorgesehen sein, dass die klappenabschnittseitige zweite äußere Strömungsoberfläche eine nach innen gerichtete Wölbung aufweist, umso zu verhindern, dass bei einer nach oben gerichteten Aktuierung der Klappe die Endkante der klappenabschnittseitigen Strömungsoberfläche in die äußere Anströmung gelangt und so ein Teil der Strömung in den Innenraum der Klappe umgelenkt wird.

Gemäß einer Ausführungsform ist vorgesehen, dass die Schwenkvorrichtung spannweitig eine Mehrzahl von Linearaktuatoren umfasst. Hierbei kann vorgesehen sein, dass 2 oder 3 Linearaktuator rund pro Klappe bzw. Ruder verwendet werden.

Gemäß einer Ausführungsform ist vorgesehen, dass der zweite Befestigungspunkt mit dem Kurvengetriebe gekoppelt ist.

In dieser Ausführungsform folgt der zweite Befestigungspunkt des Linearaktuator der durch das Kurvengetriebe vorgegebenen Bahn, sodass die Trajektorie des zweiten Befestigungspunkt und die Trajektorie des Kurvengetriebes übereinanderliegen.

Gemäß einer Ausführungsform ist vorgesehen, dass der mindestens eine Linearaktuator mit dem ersten Befestigungspunkt an einem Hinterholm der hauptabschnittsseitigen Tragstruktur des Profilkörpers angeordnet ist.

Der Hinterholm erstreckt sich dabei spannweitig als ein großes festes Element der Tragstruktur und eignet sich daher besonders zur Krafteinleitung der aerodynamischen Kräfte, die auf die Klappe bzw. Ruder im Klappenabschnitt wirken und über das Kurvengetriebe und den Linearaktuator auf den ersten Befestigungspunkt übertragen werden.

Gemäß einer Ausführungsform ist vorgesehen, dass das Kurvengetriebe derart eingerichtet ist, dass der zweite Befestigungspunkt einer kreisförmigen, elliptischen oder parabelförmigen Trajektorie folgt.

Gemäß einer Ausführungsform ist vorgesehen, dass der Profilkörper eine Tragfläche mit einem Querruder oder ein Leitwerk mit einem Höhenruder oder ein Leitwerk mit einem Seitenleitwerk ist.

Gemäß einer Ausführungsform ist vorgesehen, dass der mindestens eine Linearaktuator mit einer elektronischen Steuereinheit verbunden ist, wobei die Steuereinheit zur Aktuierung des Linearaktuators entsprechende Steuersignale generiert und an den Linearaktuator überträgt.

Die Steuereinheit erhält dabei entsprechende Steuerbefehlseingaben durch den Autopiloten und/oder den Piloten und erzeugt entsprechende Steuersignale, mit der der Linearaktuator angesteuert wird, um eine Aktuierung zu bewirken.

Der Linearaktuator kann dabei grundsätzlich eine Längenvergrößerung zwischen dem ersten und dem zweiten Befestigungspunkt bewirken, was zu einer Auslenkung des Klappenabschnittes in Richtung der ersten äußeren Strömungsoberfläche führt, wenn dort der biegeflexible Übergangsabschnitt vorgesehen ist. Bei einer längeren Verkürzung zwischen dem ersten und dem zweiten Befestigungspunkt, die der Linearaktuator ebenfalls ausführen kann, wird eine Auslenkung in Richtung der zweiten äußeren Strömungsoberfläche bewirkt. In einer Neutralstellung des Linearaktuator erfolgt keine Auslenkung des Klappenabschnittes, sodass keine aerodynamischen Kräfte auf den Klappenabschnitt wirken.

Gemäß einer Ausführungsform ist vorgesehen, dass der zweite Befestigungspunkt des Linearaktuators außerhalb des Innenraumes des Profilkörpers an einer Halterung der klappenabschnittsseitigen Tragstruktur liegt.

Bei dieser Ausführungsform greift der zweite Befestigungspunkt des Linearaktuator an einer Halterung der klappenabschnittseitigen Tragstruktur an, die aus dem durch die beiden Strömungsoberflächen gebildete Innenraum des Profilkörpers herausgeführt und so den zweiten Befestigungspunkt außerhalb des Innenraumes des Profilkörpers anordnet. Hierdurch kann über die Hebelwirkung eine Kraftreduzierung bei gleichzeitiger zusätzlicher Störung der Strömungsgrenzschicht erzielt werden.

Bei dieser Ausführungsform kann durch eine zusätzliche Halterung eine Kopplung mit dem Kurvengetriebe erreicht werden, sodass hierüber dann der Linearaktuator mit dem Kurvengetriebe in Wirkverbindung steht.

Es ist daher vom Erfindungsgedanken umfasst, dass der Linearaktuator direkt oder indirekt über eine zusätzliche Halterung mit dem Kurvengetriebe in Wirkverbindung steht.

Die vorliegende Erfindung wird anhand der beigefügten Figuren beispielhaft näher erläutert. Es zeigen:
- Figur 1: schematische Darstellung eines hinteren Ausschnittes eines aerodynamischen Profilkörpers gemäß der vorliegenden Erfindung in einer Neutralstellung;
- Figur 2: schematische Darstellung des aerodynamischen Profilkörpers gemäß Figur 1 in einer oberen Stellung;
- Figur 3: schematische Darstellung des aerodynamischen Profilkörpers gemäß Figur 1 in einer unteren Stellung;
- Figur 4: schematische Darstellung eines hinteren Ausschnittes eines aerodynamischen Profilkörpers gemäß der vorliegenden Erfindung in einer Ausführungsform;

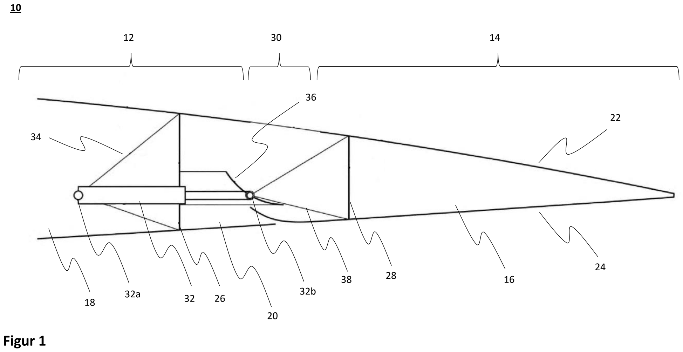

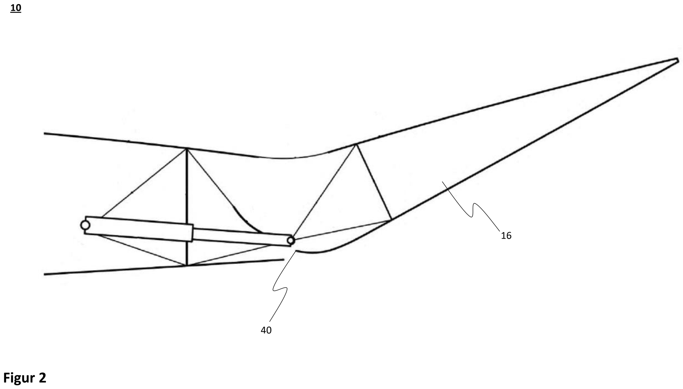

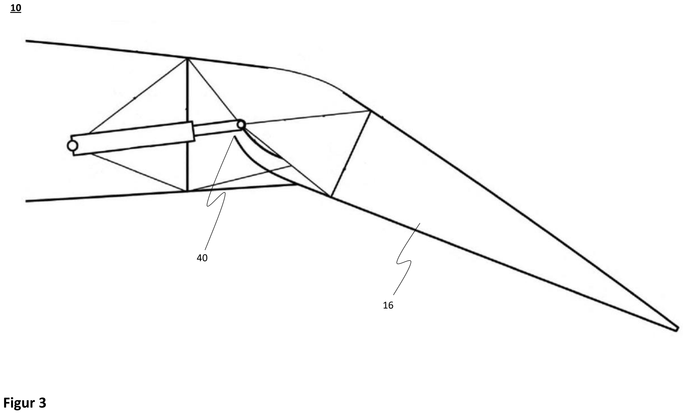

Figur 1 zeigt in einer schematisch stark vereinfachten Darstellung den Querschnitt eines hinteren Ausschnittes eines aerodynamischen Profilkörpers 10 mit einem Hauptabschnitt 12 (nur teilweise gezeigt, der gesamte vordere Bereich ist aus Übersichtlichkeitsgründen nicht dargestellt) und einen sich an den Hauptabschnitt 12 anschließenden Klappenabschnitt 14. Wie in den Figuren 2 und 3 weiter gezeigt, ist der Klappenabschnitt 14 schwenkbar gegenüber dem Hauptabschnitt 12 des Profilkörpers 10 ausgebildet, sodass der Klappenabschnitt eine Klappe 16 (auch Ruder genannt) bildet, der dem Flügelkasten 18 des Profilkörpers 10 schwenkbar angeordnet ist und durch Auslenkung nach oben oder nach unten zu einer Störung in der aerodynamischen Anströmung des Profilkörpers 10 führt, wodurch eine aerodynamische Kraft auf dem Profilkörper 10 durch die umgebende Luftströmung erreicht wird. Hierdurch kann die Position und/oder Lage des Flugzeugs beeinflusst werden.

Um den Klappenabschnitt 14 bzw. die Klappe 16 gegenüber dem Flügelkasten 18 zu verschwenken, hat der Flügelkörper 10 eine elektrisch angesteuerte Schwenkvorrichtung 20, mit der die Klappe 16 nach oben oder nach unten geschwenkt werden kann.

Der Flügelkörper 10 hat des Weiteren eine obere (erste) äußeren Strömungsoberfläche 22, die durch eine durchgehende Decklage gebildet ist und die obere Profilfläche des Flügelkörper 10 bildet. Des Weiteren hat der Flügelkörper 10 eine untere (zweite) äußere Strömungsoberfläche 24, die im Bereich der Schwenkvorrichtung 20 durch eine unterbrochene Decklage gebildet wird. Die untere äußere Strömungsoberfläche 24 bildet dabei die untere Profilfläche des Flügelkörpers 10.

Die obere und die untere Strömungsoberfläche 22, 24 sind dabei an einer innenliegenden Tragstruktur angeordnet, die in den Ausführungsbeispielen der Figuren nur rudimentär und schematisch stark stellt sind. Im Hauptabschnitt 12 befindet sich dabei ein Hinterholm 26, der sich spannweitig erstreckt und an dem die Decklagen angeordnet werden. In der Regel noch vorhandenen weiteren Versteifungselemente, wie beispielsweise Spanten, sind nicht dargestellt und für die Beschreibung der Erfindung nicht wesentlich.

Auch der Klappenabschnitt 14 weist eine solche klappenabschnittseitige Tragstruktur in Form eines sich spannweitig erstreckenden Holmes 28 auf.

Die obere äußere Strömungsoberfläche 22 weist im Bereich zwischen der hauptabschnittseitigen Oberfläche und der klappenabschnittseitigen Oberfläche einen Übergangsbereich 30 auf, innerhalb dessen die äußere Strömungsoberfläche biegeflexiblen ist.

Wird die Klappe 16 die Schwenkvorrichtung 20 nach oben oder nach unten verschwenkt, wie dies in den Figuren 2 und 3 ersichtlich wird, so wird die obere äußere Strömungsoberfläche 22 in dem Übergangsbereich 30 aufgrund ihrer Flexibilität gebogen, wobei der Übergangsbereich 30 hier nur auf Biegung und nicht auf Druck und/oder Zug beansprucht wird.

Die Schwenkvorrichtung 20 hat für diesen Zweck mindestens einen Aktuator 32, der mit einem ersten Ende 32a an der Tragstruktur, genauer gesagt im Ausführungsbeispiel der Figur 1 an dem Hinterholm 26 des Hauptabschnittes 12, angeordnet ist. Der Aktuator 32 kann dabei mit dem ersten Ende 32a direkt an dem Hinterholm 26 angeordnet werden oder, wie in Figur 1 gezeigt, mithilfe zusätzlicher Halterungen 34, mit denen die Größenverhältnisse besser ausgenutzt werden können.

Mit dem gegenüberliegenden zweiten Ende 32b steht der Linearaktuator 32 mit einem Kurvengetriebe 36 so in Wirkverbindung, dass bei einer Längenänderung zwischen dem ersten Ende 32a und dem zweiten Ende 32b aufgrund einer Aktuierung des Linearaktuators 32 dieses zweite Ende 32b der Führung des Kurvengetriebes 36 folgt und somit einer gebogenen Trajektorie folgt.

Über Halterungen 38 ist dabei der Klappenabschnitt 14 ebenfalls mit diesem zweiten Ende 32b des Linearaktuators 32 verbunden, wobei diese Halterungen 38 in der klappenabschnittseitigen Tragstruktur Kraft technisch angreifen. Im Ausführungsbeispiel der Figur 1 sind diese Halterungen 38 mit dem Holm 28 der Klappe 16 verbunden.

Wird der Linearaktuator 32 nunmehr aktuiert (bewirkt eine Verkürzung oder Verlängerung des Abstandes zwischen den beiden Enden), so folgt nicht nur das zweite Ende 32b des Linearaktuators 32 der Führung des Kurvengetriebes 36, sondern auch die Endpunkte der Halterungen 38, die an dem zweiten Ende 32b des Linearaktuators 32 angeordnet sind. Hierdurch entsteht eine Hebelwirkung mit einer Hebelkraft, die auf den Holm 28 und somit auf die Klappe 16 wirkt, sodass die Klappe 16 entweder nach oben oder nach unten verschwenkt wird.

Erfolgt eine Verlängerung des Abstandes zwischen den beiden Enden des Linearaktuators, so wird demnach die Klappe 16 nach oben verschwenkt, wie diesen Figur 2 gezeigt ist. Erfolgt hingegen eine Verkürzung des Abstandes zwischen den beiden Enden des Linearaktuators, so wird die Klappe 16 nach unten verschwenkt, wie dies in Figur 3 gezeigt ist.

Figur 2 zeigt dabei dieselben Elemente wie Figur 1. Um zu verhindern, dass sich die klappenabschnittseitige untere Strömungsoberfläche mit der in Richtung Hauptabschnitt ausgerichteten Endkante 40 außerhalb der Strömungsoberfläche befindet, wenn die Klappe 16 nach oben verschwenkt wurde, ist diese im Bereich der Endkante 40 nach innen gebogen, sodass die Endkante 40 stets im Innenraum des Profilkörpers 10 verbleibt.

Wird die Klappe 16 hingegen nach unten verschwenkt, wie dies in Figur 3 gezeigt ist, so wird diese Endkante 40 weit in den Innenraum des Profilkörpers hineingeführt und dort störungsfrei aufgenommen.

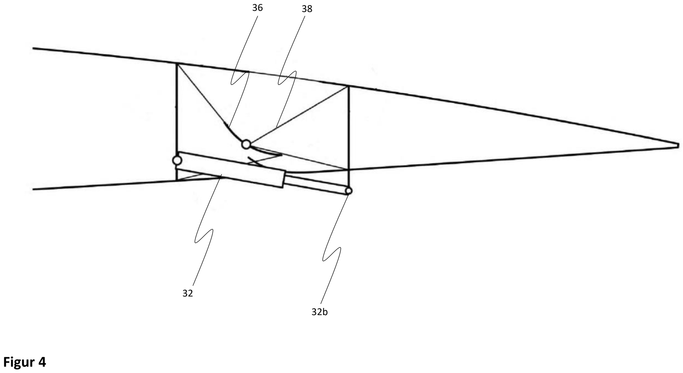

Figur 4 zeigten Ausführungsbeispiel, bei dem das zweite Ende 32b des Linearaktuators 32 nicht direkt und unmittelbar mit dem Kurvengetriebe 36 in Wirkverbindung steht, sondern mittelbar über die Halterungen 38. Das zweite Ende 32b wird dabei an einer Verlängerung des Holmes 28 des Klappenabschnittes 14 angeordnet, wobei im Ausführungsbeispiel der Figur 4 diese Verlängerung des Holmes 28 außerhalb des Innenraumes des Profilkörpers 10 liegt. Das Ende der beiden Halterungen 38 steht dabei mit dem Kurvengetriebe 36 in Wirkverbindung, sodass wie auch in dem Ausführungsbeispiel der Figur 1 die Klappe 16 einer vorgegebenen Trajektorie folgt.

### Bezugszeichenliste

- 10: Profilkörper
- 12: Hauptabschnitt
- 14: Klappenabschnitt
- 16: Klappe/Ruder
- 18: Flügelkasten
- 20: Schwenkvorrichtung
- 22: erste äußere Strömungsoberfläche
- 24: zweite äußere Strömungsoberfläche
- 26: hauptabschnittseitiger Hinterholm
- 28: klappenabschnittseitiger Holm
- 30: Übergangsabschnitt
- 32: Linearaktuator
- 32a: hauptabschnittseitiges erstes Ende des Linearaktuator
- 32b: klappenabschnittseitiges zweites Ende des Linearaktuator
- 34: hauptabschnittseitige Halterungen
- 36: Kurvengetriebe
- 38: klappenabschnittseitige Halterungen
- 40: Endkante

## Patentansprüche

1. Aerodynamischer Profilkörper (10) für ein Flugzeug, der eine erste äußere Strömungsoberfläche (22) und eine gegenüberliegende zweite äußere Strömungsoberfläche (24) hat, die an einer Tragstruktur des Profilkörpers (10) angeordnet sind und sich von einer Vorderkante des Profilkörpers (10) hin zu einer Hinterkante des Profilkörpers (10) erstrecken, sodass im Querschnitt dem Profilkörper (10) eine aerodynamische Profilform verliehen wird, wobei der Profilkörper (10) einen Hauptabschnitt (12) hat, an dem sich ein Klappenabschnitt (14) anschließt, wobei der Klappenabschnitt (14) mittels einer Schwenkvorrichtung (20) schwenkbar an dem Hauptabschnitt (12) angeordnet ist und sowohl der Hauptquerschnitt des Hauptabschnittes (12) und als auch der Klappenquerschnitt des Klappenabschnittes (14) eine unveränderliche Form aufweisen, wobei in einem Übergangsabschnitt (30) zwischen dem Hauptabschnitt (12) und dem Klappenabschnitt (14) die erste äußere Strömungsoberfläche (22) biegeflexibel ist, **dadurch gekennzeichnet, dass** die Schwenkvorrichtung (20) mindestens einen Linearaktuator (32, 32a, 32b) hat, der mit einem ersten Befestigungspunkt an der hauptabschnittsseitigen Tragstruktur des Hauptabschnittes (12) und mit einem gegenüberliegenden zweiten Befestigungspunkt an der klappenabschnittsseitigen Tragstruktur des Klappenabschnittes (14) jeweils drehbeweglich angeordnet ist, sodass bei Aktuierung des Linearaktuators (32, 32a, 32b) eine Längenänderung zwischen dem ersten und dem zweiten Befestigungspunkt bewirkt wird, wobei der Linearaktuator (32, 32a, 32b) mit einem Kurvengetriebe (36) derart in Wirkverbindung steht, dass der zweite Befestigungspunkt an der klappenabschnittsseitigen Tragstruktur bei Aktuierung einer durch das Kurvengetriebe (36) vorgegebenen Trajektorie folgt.

2. Profilkörper (10) nach Anspruch 1, **dadurch gekennzeichnet, dass** sich die erste äußere Strömungsoberfläche (22) durchgehend von der Vorderkante bis zu der Hinterkante erstreckt.

3. Profilkörper (10) nach Anspruch 1 oder 2, **dadurch gekennzeichnet, dass** die zweite äußere Strömungsoberfläche (24) im Übergangsabschnitt (30) unterbrochen ist und sich die klappenabschnittsseitige Strömungsoberfläche des Klappenabschnittes (14) unter die hauptabschnittsseitige Strömungsoberfläche des Hauptabschnittes (12) in einen Innenraum des Profilkörpers (10) erstreckt.

4. Profilkörper (10) nach einem der vorhergehenden Ansprüche, **dadurch gekennzeichnet, dass** die Schwenkvorrichtung (20) spannweitig eine Mehrzahl von Linearaktuatoren (32, 32a, 32b) umfasst.

5. Profilkörper (10) nach einem der vorhergehenden Ansprüche, **dadurch gekennzeichnet, dass** der zweite Befestigungspunkt mit dem Kurvengetriebe (36) gekoppelt ist.

6. Profilkörper (10) nach einem der vorhergehenden Ansprüche, **dadurch gekennzeichnet, dass** der mindestens eine Linearaktuator (32, 32a, 32b) mit dem ersten Befestigungspunkt an einem Hinterholm (26) der Tragstruktur des Profilkörpers (10) angeordnet ist.

7. Profilkörper (10) nach einem der vorhergehenden Ansprüche, **dadurch gekennzeichnet, dass** das Kurvengetriebe (36) derart eingerichtet ist, dass der zweite Befestigungspunkt einer kreisförmigen, elliptischen oder parabelförmigen Trajektorie folgt.

8. Profilkörper (10) nach einem der vorhergehenden Ansprüche, **dadurch gekennzeichnet, dass** der Profilkörper (10) eine Tragfläche mit einem Querruder oder ein Leitwerk mit einem Höhenruder oder ein Leitwerk mit einem Seitenleitwerk ist.

9. Profilkörper (10) nach einem der vorhergehenden Ansprüche, **dadurch gekennzeichnet, dass** der mindestens eine Linearaktuator (32, 32a, 32b) mit einer elektronischen Steuereinheit verbunden ist, wobei die Steuereinheit zur Aktuierung des Linearaktuators (32, 32a, 32b) entsprechende Steuersignale generiert und an den Linearaktuator (32, 32a, 32b) überträgt.

10. Profilkörper (10) nach einem der vorhergehenden Ansprüche, **dadurch gekennzeichnet, dass** der zweite Befestigungspunkt des Linearaktuators (32, 32a, 32b) außerhalb des Innenraumes des Profilkörpers (10) an einer Halterung (34, 38) der klappenabschnittsseitigen Tragstruktur liegt.

11. Flugzeug mit mindestens einem aerodynamischen Profilkörper (10) gemäß einem der vorhergehenden Ansprüche.
